Europäisches Patentamt

European Patent Office

Office européen des brevets

(19)

(11) Veröffentlichungsnummer: **0 173 073**
A2

# (12) EUROPÄISCHE PATENTANMELDUNG

(21) Anmeldenummer: 85109211.4

(22) Anmeldetag: 23.07.85

(51) Int. Cl.⁴: **G 11 B 33/04**

(30) Priorität: 30.08.84 DE 3431814

(43) Veröffentlichungstag der Anmeldung: 05.03.86
Patentblatt 86/10

(84) Benannte Vertragsstaaten: **AT BE CH DE FR GB IT LI LU NL SE**

(71) Anmelder: **Grüske, Werner, Am Mühlgarten, D-8521 Spardorf (DE)**

(72) Erfinder: **Grüske, Werner, Am Mühlgarten, D-8521 Spardorf (DE)**

(74) Vertreter: **Richter, Bernhard, Dipl.-Ing., Beethovenstrasse 10, D-8500 Nürnberg 20 (DE)**

(54) **Einrichtung zum geordneten Aufbewahren einer grösseren Anzahl von Aufzeichnungsträgern.**

(57) Die Erfindung geht aus von einer Einrichtung zum geordneten Aufbewahren einer größeren Anzahl von blatt- oder plattenförmigen Aufzeichnungsträgern, insbesondere von Disketten oder Mikrofiches, mit einem Behältnis zur Aufnahme der Aufzeichnungsträger, wobei ein Vordruck vorgesehen ist, der entsprechend einer Anzahl von Aufzeichnungsträgern Strichmarkierungen aufweist und wobei ferner an den nach außen weisenden Rändern der im Behältnis befindlichen, bzw. darin einzusteckenden Aufzeichnungsträger weitere Strichmarkierungen angeordnet sind, die jeweils in einer solchen Lage an dem Rand des Aufzeichnungsträgers vorgesehen sind, daß ihre Strichmarkierung mit einer zugeordneten Strichmarkierung auf dem Vordruck in gleicher Flucht liegt. Um eine solche Einrichtung einfach und bequem mit anderen Einrichtungen dieser Art zu entsprechenden Blöcken zusammensetzen zu können, sind mehrere Behältnisse (1) vorgesehen und durch an ihren Außenflächen vorgesehene Verbindungsmittel sowohl übereinander gestapelt als auch nebeneinander angeordnet miteinander verbindbar. Ferner kann eine Verschlußplatte (2) vorgesehen sein.

**DIPL.-ING. BERNHARD RICHTER**

PATENTANWALT

zugel. Vertreter beim Europ. Patentamt
European Patent Attorney

8500 NÜRNBERG 20, den
Beethovenstraße 10
Telefon Sa.-Nr. (09 11) 59 50 15
Telegramm: Patri
Telex: 06 23 268 patri d

0173073

04.07.1985
R-gi

Herr Werner GRÜSKE, Am Mühlgarten 21, 8521 Spardorf

---

"Einrichtung zum geordneten Aufbewahren einer
größeren Anzahl von Aufzeichnungsträgern"

---

Die Erfindung betrifft eine Einrichtung gemäß dem Oberbegriff des Anspruches 1. Eine solche Einrichtung ist aus der DE-PS 22 08 684 bekannt. Dabei sind die Aufzeichnungsträger in Gruppen zusammengefaßt, wobei jede Gruppe sich in einem Einschub befindet. Jeder Einschub weist einen gelenkig mit seiner Bodenplatte verbundenen deckelartigen Abschluß auf. Ist der Einschub aus dem Behältnis herausgezogen, so kann man den Abschluß nach unten abklappen, womit an seiner Innenseite verlaufende Strichmarkierungen sichtbar werden. Jeder Aufzeichnungsträger hat an seinem nach außen weisenden Rand eine Strichmarkierung, die mit der ihr zugeordneten Strichmarkierung auf dem Vordruck, bzw. auf dem Abschluß in gleicher Flucht liegt. Dieses Ordnungssystem hat sich bewährt.

Die Aufgabe der Erfindung besteht demgegenüber darin, eine solche einzelne Einrichtung derart auszugestalten, daß sie einfach und bequem mit anderen Einrichtungen dieser Art zu entsprechenden Blöcken zusammengesetzt werden kann, wobei bevorzugt auch die Möglichkeit gegeben sein soll, zwecks Geheimhaltung bzw. Datenschutz einen Teil der Einrichtungen eines solchen Blockes unter Verschluß zu halten.

Der Lösung der vorgenannten Aufgabe dienen, ausgehend vom Oberbegriff des Anspruches 1, zunächst die Merkmale des Kennzeichens des Anspruches 1. Hiermit kann man also mehrere Einrichtungen bzw. Behältnisse wahlweise so aufeinander stapeln und/oder nebeneinander anordnen, daß sie in dieser Anordnung fest miteinander verbunden sind. Damit kann man sich dem vorhandenen Raumbedarf in einem Schrank, einer Schreibtischschublade oder dergleichen anpassen. In diesem Zusammenhang empfiehlt es sich, daß eine bestimmte Zahl, z. B. neun, solcher Behältnisse (bzw. Einrichtungen) übereinander gestapelt die Normhöhe eines Aktenordners haben und nebeneinander angeordnet die Normbreite einer Schreibtischschublade.

Das Merkmal des Anspruches 2 ist eine bevorzugte Ausführungsform der Erfindung. Hierdurch ist es möglich, einen solchen Block von Behältnissen auseinanderzunehmen und sie in einer anderen Weise übereinander und/oder nebeneinander zu ordnen und damit in einem anderen Schrankfach oder dergleichen mit anderen Abmessungen unterzubringen.

Die Merkmale der Ansprüche 3 - 5 beinhalten vorteilhafte Ausgestaltungen der Verbindungsmittel.

Die Merkmale des Anspruches 6 stellen eine besonders wesentliche und bevorzugte Ausführungsform der Erfindung dar. Hiermit ist es möglich bei einer Anordnung einer bestimmten Zahl von Behältnissen einige, z. B. drei, dieser Behältnisse durch die Verschlußplatte abzuschließen. Dies ist bei dem bevorzugten Anwendungsgebiet der Erfindung, nämlich Aufbewahrung von Disketten oder Mikrofiches wichtig, da diese zur Speicherung von Daten dienen können, die geheim zu halten sind. So können z. B. in einem Betrieb die Datenträger, die geheim zu haltende Daten tragen (z.B. Personaldaten) in den Behältnissen untergebracht werden, die durch die Verschlußplatte verschließbar sind. Die übrigen Behältnisse einer solchen Anordnung dienen zur Aufnahme von Datenträgern, die keine geheim zu haltenden Daten aufweisen. Der spezielle Vorteil dieser Anordnung ist neben der Möglichkeit der Geheimhaltung, daß die frei zugänglichen und die geheim zu haltenden Datenträger sich in einer gemeinsamen Anordnung bzw. Block befinden. Die aufwendige und umständliche Unterbringung geheim zu haltender Daten in einem gesonderten abschließbaren Fach, Tresor oder dergleichen, entfällt hiermit.

Vorteilhafte, nämlich relativ einfach herzustellende und leicht zu bedienende Ausgestaltungen der Verschlußplatte und der zugehörigen Mittel sind Inhalt der Ansprüche 7 - 9.

Eine vorteilhafte, stabile und gut zu handhabende Ausgestaltung der Behältnisse ist Inhalt des Anspruches 10. Der hierbei vorgesehene Deckel kann gemäß Anspruch 11 zwecks Zugängigkeit des Sperriegels entsprechend ausgestaltet sein.

Weitere Vorteile und Merkmale der Erfindung sind im einzelnen den Unteransprüchen, sowie der nachstehenden Beschreibung und der zugehörigen Zeichnung von erfindungsgemäßen Ausführungsmöglichkeiten zu entnehmen. In der Zeichnung zeigt:

Fig. 1: im Prinzip und in gegenüber den anderen Figuren verkleinertem Maßstab eine Frontansicht auf eine Anordnung mehrerer Behältnisse nach der Erfindung,

Fig. 2: ein einzelnes Behältnis in der Draufsicht,

Fig. 3:   das Behältnis nach Fig. 2 in der
          Unteransicht,

Fig. 4:   eine Frontansicht auf das Behältnis der Fig. 2, 3 mit geschlossenem
          Deckel,

Fig. 5:   die gleiche Frontansicht, jedoch mit
          geöffnetem Deckel,

Fig. 6:   einen Teilschnitt gemäß der Linie
          VI-VI in Fig. 2.


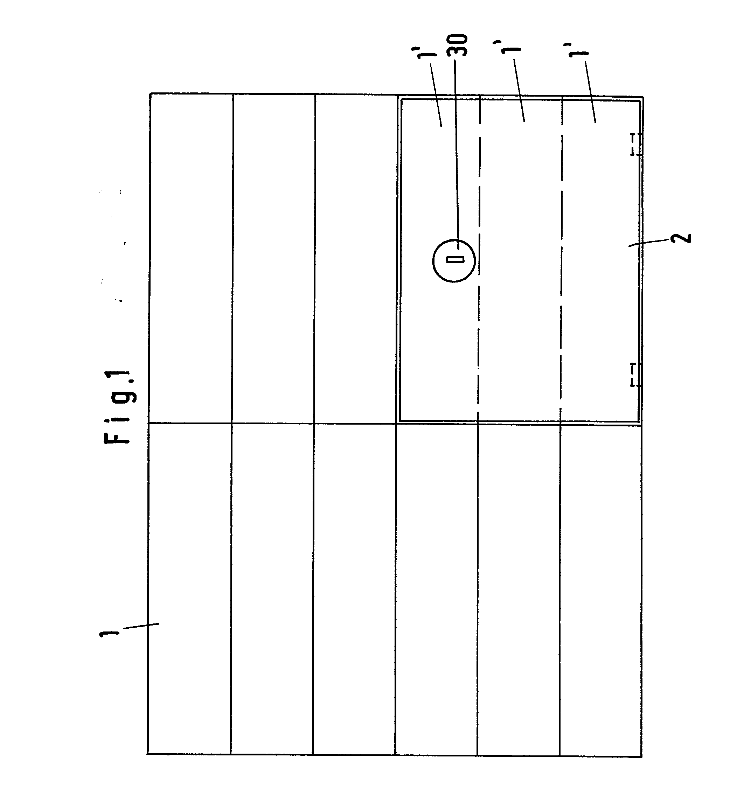

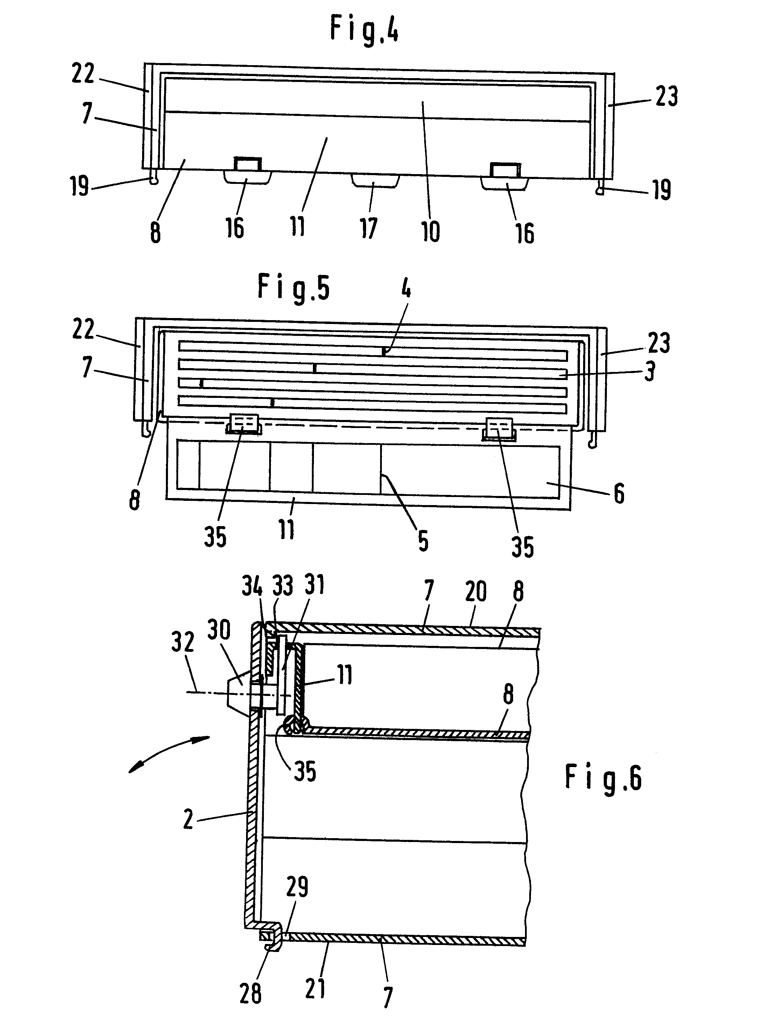

Fig. 1 zeigt rein schematisch insgesamt zwölf Behältnisse 1, von denen jeweils sechs übereinander angeordnet sind und jeweils zwei nebeneinander angeordnet sind. Die einzelnen Behältnisse 1 sind an ihren Stoßflächen miteinander und zwar bevorzugt lösbar verbunden. Im einzelnen wird hierzu auf die nachstehenden Ausführungen verwiesen. Die in Fig. 1 rechts unten gelegenen drei Behältnisse 1' sind durch eine ebenfalls noch näher zu erläuternde Verschlußplatte 2 abgeschlossen. Wie bereits erwähnt, dienen die Behältnisse zur Aufbewahrung von Blatt- oder plattenförmigen Aufzeichnungsträgern, insbesondere von Disketten oder Mikrofiches 3. Hiervon ist ein Stapel in Fig. 5 dargestellt mit Strichmarkierungen 4, die zu entsprechenden Strichmarkierungen 5 auf einem Vordruck 6 passen. Dieses Ordnungssystem ist an sich bekannt (siehe die eingangs genannte DE-PS 22 08 684).

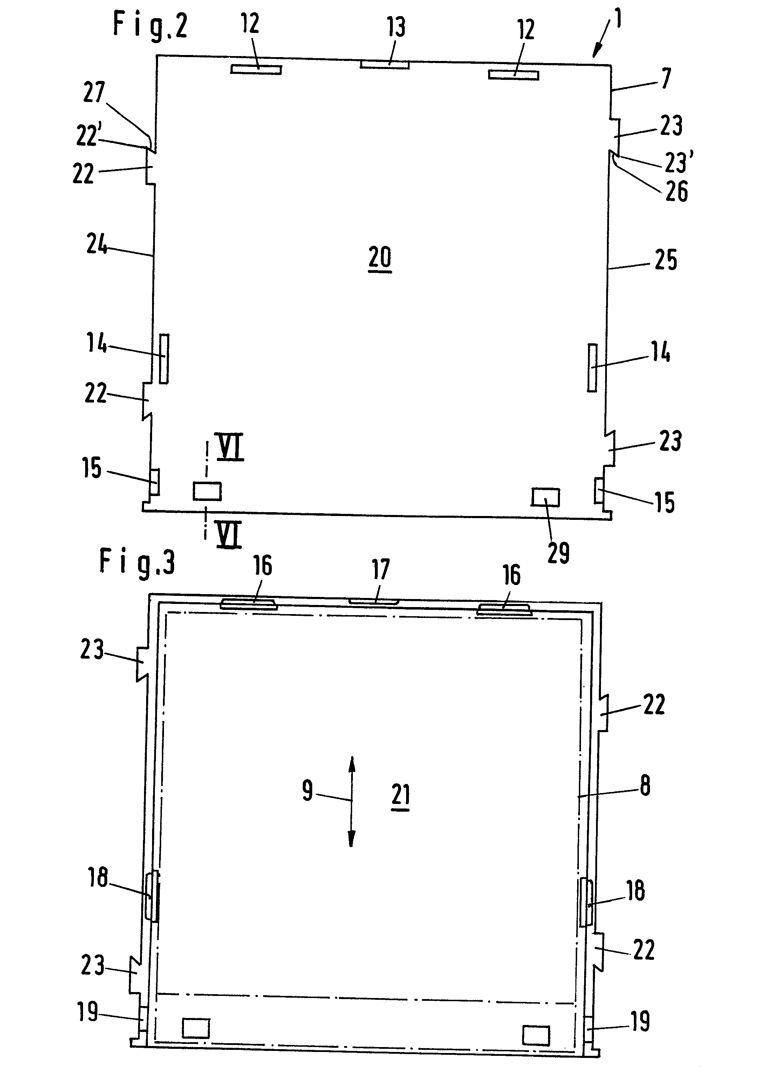

Die, wie gesagt, bevorzugt lösbare Verbindung der einzelnen Behältnisse 1  ist in einem Ausführungsbeispiel anhand der Fig. 2 und 3 dargestellt. Diese Behältnisse 1 bestehen aus einem Gehäuse 7 und Einschüben 8, die gemäß dem Doppelpfeil 9 (Fig. 3) in das Gehäuse 7 einschiebbar bzw. aus diesem herausziehbar sind. Zum Herausziehen kann eine Griffleiste 10 an einem noch näher zu erläuternden Frontdeckel 11 des Einschubes 8 dienen. Zur Stapelung der Behältnisse übereinander sind Aussparungen 12, 13, 14 und 15 der oberen Fläche (bzw. unteren Fläche) und darin einsteckbare Vorsprünge 16, 17, 18 und 19 der unteren Fläche (bzw. oberen Fläche) des Gehäuses 7 vorgesehen. Die obere Fläche ist in Fig. 2 mit 20 und die untere Fläche in Fig. 3 mit 21 beziffert.

Zur seitlichen Verbindung dienen sich von oben nach unten erstreckende, Hinterschneidungen bildende Leisten 22, 23. Dabei sind die Leisten 22 der linken Seite 24 so zu den Leisten 23 der in der Zeichnung rechten Seite 25 in Richtung des Doppelpfeiles 9 versetzt, daß die Spitzen 22' der Leisten 22 in die Hinterschneidungen 26 der Leisten 23 passen, während die Spitzen 23' der Leisten 23 in die Hinterschneidungen 27 der Leisten 22 passen.

Die bereits in Fig. 1 schematisch dargestellte Verschlußplatte 2 ist im Schnitt näher der Fig. 6 zu entnehmen. Sie ist an ihrem unteren Ende mittels hakenförmig ausgebildeten Halterungen 28 durch entsprechende Öffnungen 29 des Bodens des Gehäuses 7 steckbar. Diese Steckverbindung 28, 29 kann so ausgebildet sein, daß die Verschlußplatte 2 um sie in Richtung des in Fig. 6 gezeichneten Doppelpfeiles schwenkbar ist. In ihrem oberen Bereich besitzt sie ein Schloß 30, mittels dessen ein Sperriegel 31 um die Drehachse 32 verschwenkbar ist, so daß er in der Sperrlage durch einen Schlitz 33 des Deckels 11 hindurchtritt und hinter eine Sperrleiste 34 der Oberplatte des hier oberen Gehäuses 7 greift. Damit sind die hinter der Verschlußplatte 2 befindlichen Behältnisse bzw. Einschübe und damit die darin aufbewahrten Datenträger gegen einen ungefugten Zugriff gesichert. Falls erforderlich können in diesem Fall noch zusätzliche Mittel vorgesehen sein, so daß die einzelnen Behältnisse nicht voneinander abzuheben sind, z. B. ein Verkleben dieser Behältnisse miteinander. Es versteht sich, daß die Verschlußplatte nicht nur drei übereinander befindliche Behältnisse 1' gemäß Fig. 1, sondern auch eine andere, insbesondere größere Anzahl von Behältnissen abdecken kann, z. B. auch nebeneinander befindliche Behältnisse. Hierzu sind lediglich die Abmessungen der Verschlußplatte entsprechend zu wählen.

Es empfiehlt sich, alle vorgenannten Teile (mit Ausnahme des Schlosses und des Sperriegels) aus Kunststoff anzufertigen. Der Deckel 11 kann um Scharniere 35 am Boden des entsprechenden Gehäuses angelenkt sein. Seine in der heruntergeklappten Lage nach außen liegende Fläche ist Träger des Vordruckes 6 (siehe Fig. 5).

**DIPL.-ING. BERNHARD RICHTER**

**PATENTANWALT**      - 7 -

zugel. Vertreter beim Europ. Patentamt
European Patent Attorney

0173073

8500 NÜRNBERG 20, den
Beethovenstraße 10
Telefon Sa.-Nr. (09 11) 59 50 15
Telegramm: Patri
Telex: 06 23 268 patri d

04.07.1985
R-gi

Herr Werner GRÜSKE, Am Mühlgarten 21, 8521 Spardorf

Patentansprüche:

1. Einrichtung zum geordneten Aufbewahren einer größeren Anzahl von blatt- oder plattenförmigen Aufzeichnungsträgern, insbesondere von Disketten oder Mikrofiches, mit einem Behältnis zur Aufnahme der Aufzeichnungsträger, wobei ein Vordruck vorgesehen ist, der entsprechend einer Anzahl von Aufzeichnungsträgern Strichmarkierungen aufweist und wobei ferner an den nach außen weisenden Rändern der im Behältnis befindlichen, bzw. darin einzusteckenden Aufzeichnungsträger weitere Strichmarkierungen angeordnet sind, die jeweils in einer solchen Lage an dem Rand des Aufzeichnungsträgers vorgesehen sind, daß ihre Strichmarkierung mit einer zugeordneten Strichmarkierung auf dem Vordruck in gleicher Flucht liegt, dadurch gekennzeichnet, daß mehrere Behältnisse (1) vorgesehen sind und durch an ihren Außenflächen vorgesehene Verbindungsmittel sowohl übereinander gestapelt, als auch nebeneinander angeordnet miteinander verbindbar sind.

2. Einrichtung nach Anspruch 1, dadurch gekennzeichnet, daß die Verbindungen zwischen den Behältnissen lösbar sind.

3. Einrichtung nach Anspruch 1 und 2, dadurch gekennzeichnet, daß für die Verbindung übereinander angeordneter Behältnisse (1) Steckverbindungen mittels Ausnehmungen (12 bis 15) und darin passenden Vorsprüngen 16 bis 19) vorgesehen sind.

4. Einrichtung nach einem der Ansprüche 1 bis 3, dadurch gekennzeichnet, daß für die Verbindung nebeneinander angeordneter Behältnisse (1) seitliche von oben nach unten verlaufende Leisten (22, 23) mit ineinander passenden Hinterschneidungen (26, 27) vorgesehen sind.

5. Einrichtung nach Anspruch 4, dadurch gekennzeichnet, daß die Leisten (22) der einen Seitenfläche (24) in der Längsrichtung (9) des Behältnisses zu den Leisten (23) der anderen, gegenüberliegenden Seite (25) derart versetzt sind, daß Spitzen oder Vorsprünge (22' bzw. 23') der einen Leiste (22 bzw. 23) in die Hinterschneidungen (26 bzw. 27) der anderen Leiste passen.

6. Einrichtung nach einem der Ansprüche 1 bis 5, dadurch gekennzeichnet, daß eine Verschlußplatte (2) vorgesehen ist, deren Fläche etwa den Abmessungen der Frontseite einer bestimmten Zahl von übereinander und/oder nebeneinander angeordneten Behältnissen (1') entspricht und daß die Verschlußplatte mit diesen Behältnissen lösbar verbindbar und in der Verbundlage, die Frontseiten dieser Behältnisse abdeckend, verschließbar sind.

7. Einrichtung nach Anspruch 6, dadurch gekennzeichnet, daß die Verschlußplatte (2) zum einen durch eine Steckverbindung (28, 29) und zum anderen durch einen mittels Schloß bzw. Schlüssel (30) zu betätigenden Sperriegel (31) mit dem jeweiligen Behältnis (1) wahlweise versperrbar und wieder davon lösbar ist, wobei bevorzugt die Steckverbindung im unteren Bereich und das Schloß im oberen Bereich der Verschlußplatte (2) vorgesehen sind.

8. Einrichtung nach Anspruch 7, dadurch gekennzeichnet, daß die Steckverbindung zwischen Verschlußplatte (2) und Behältnis (1) scharnierartig ausgebildet ist, so daß die Verschlußplatte um diese Steckverbindung nach außen wegschwenkbar bzw. wieder in die Verschlußlage zurückschwenkbar ist.

9. Einrichtung nach Anspruch 7 und 8, dadurch gekennzeichnet, daß für die Fixierung des Sperriegels in der Schließlage dieser hinter einen leistenartigen Vorsprung (34) des Behältnisses greift.

10. Einrichtung nach einem der Ansprüche 1 bis 9, dadurch gekennzeichnet, daß jedes Behältnis (1) aus einem Gehäuse (7) und einem aus diesen herausziehbaren Einschub (8) besteht, welcher die Aufzeichnungsträger aufnimmt und daß die Einschübe frontseitig einen an sie scharnierartig angelenkten und nach unten abklappbaren Deckel (11) aufweisen, welcher Träger des die Strichmarkierungen (5) aufweisenden Vordruckes (6) ist.

11. Einrichtung nach einem der Ansprüche 7 bis 10, dadurch gekennzeichnet, daß die Deckel (11) einen Schlitz (33) besitzen, durch den bei eingeschobenem Schub in der Verschlußlage der Sperriegel (33) hindurchragt.

Fig.1

0173073

**Fig.2**

**Fig.3**

3/3

0173073

Fig.4

Fig.5

Fig.6